(19) Europäisches Patentamt
European Patent Office
Office européen des brevets

(11) **EP 1 746 414 A2**

## (12) EUROPEAN PATENT APPLICATION

(43) Date of publication:
**24.01.2007 Bulletin 2007/04**

(51) Int Cl.:
*G01N 30/32* (2006.01)   *F04B 19/24* (2006.01)
*G01N 29/02* (2006.01)

(21) Application number: **06015027.3**

(22) Date of filing: **19.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **20.07.2005 JP 2005210351**
**17.03.2006 JP 2006073741**
**07.06.2006 JP 2006158759**

(71) Applicants:
• **National Institute of Advanced Industrial Science and Technology**
**Tokyo 100-8921 (JP)**
• **Olympus Corporation**
**Tokyo 151-0072 (JP)**

(72) Inventors:
• **Goto, Hiroshi**
**National Institute of Advanced**
**Tsukuba-shi**
**Ibaraki 305-8564 (JP)**

• **Maeda, Ryutaro**
**National Institute of Advanced**
**Tsukuba-shi**
**Ibaraki 305-8564 (JP)**
• **Ikehara, Tsuyoshi**
**National Institute of Advanced**
**Tsukuba-shi**
**Ibaraki 305-8564 (JP)**
• **Manzoni, Guilio**
**National Institute of Advanced**
**Tsukuba-shi**
**Ibaraki 305-8564 (JP)**
• **Heisig, Sven**
**National Institute of Advanced**
**Tsukuba-shi**
**Ibaraki 305-8564 (JP)**
• **Mihara, Takashi**
**National Institute of Advanced**
**Tsukuba-shi**
**Ibaraki 305-8564 (JP)**

(74) Representative: **HOFFMANN EITLE**
**Patent- und Rechtsanwälte**
**Arabellastrasse 4**
**81925 München (DE)**

(54) **Molecule detection sensor, detection sensor, and gas transferring pump**

(57)     A sensor 10 has a pump 20, an adsorbing unit 30, a gas chromatography unit 40, and a sensor unit 50 all of which are provided on a substrate 80. The pump 20 sucks in and condenses surrounding gas, and the adsorbing unit 30 adsorbs molecules contained in the gas. The gas chromatography unit 40 separates a particular type of molecules from those adsorbed to the adsorbing unit 30. An absorption film in the sensor unit 50 then adsorbs the separated particular type of molecules. The sensor unit 50 detects adsorption of the molecules to the adsorption film. On the basis of the detection level of the adsorption, a measurement processing unit 60 determines the presence of the particular type of molecules or measures the amount of the molecules. The present invention thus detects the presence of a particular type of molecules or measures the amount of the molecules.

FIG. 1

**Description**

BACKGROUND OF THE INVENTION

Field of the Invention

The present invention relates to a molecule detection sensor that is suitable for detecting a smell, gas, or the like.

Description of the Related Art

A sensor has been available which detects the presence of a potentially explosive gas, a toxic gas, or the like, or its quantitative concentration. This sensor adsorbs a particular type of molecules contained in the gas to detect whether or not molecules have been actually adsorbed, or the amount of molecules adsorbed. The sensor thus detects the presence or concentration of any gas. Such a sensor is installed in facilities, apparatuses, and the like which handle gas, to control gas leakage or amount.

Much effort has been made to develop fuel cells in recent years. Since fuel cells use hydrogen, it is preferable to monitor hydrogen stations as well as vehicles, apparatuses, instruments, and the like which use fuel cells, for hydrogen leakage. The above sensor can be used for these applications.

The sensor adsorbing a particular type of molecules to detect whether or not molecules have been actually adsorbed, or the amount of molecules adsorbed can be used not only for the above applications but also for the following: analysis of freshness or components of foods, environmental control for providing and maintaining a comfortable space, and sensing of conditions of a living organism such as a human body.

Such a sensor has been roughly classified into two types based on the respective schemes.

One of these schemes provides a molecule adsorption film (sensitive film) on a cantilever to adsorb a particular type of molecules. Adsorption of molecules is detected on the basis of a change in the condition of the cantilever which occurs when molecules are adsorbed on the molecule adsorption film. Adsorption of molecules on the molecule adsorption film increases the mass of the molecule adsorption film. This changes the deflection amount of the cantilever, which makes it possible to detect that the particular type of molecules has been adsorbed. Further, the adsorption of molecules increases the mass of the molecule adsorption film, thus changing the resonance frequency of a system consisting of the cantilever and the adsorption film. Accordingly, adsorption of the particular types of molecules can also be detected on the basis of the change in the resonance frequency (see, for example, Suman Cherian, Thomas Thundat, "Determination of adsorption-induced variation in the spring constant of a microcantilever", Applied Physics Letter, 2002, Vol. 80, No. 12, pp. 2219 to 2221).

The other scheme provides a molecule adsorption film in a quartz resonator so that adsorption of a particular type of molecules is detected on the basis of a change in the resonance frequency of the quartz resonator when molecules are adsorbed on the molecule adsorption film.

It has already been reported that these schemes enable the realization of sensing of hydrogen gas by using an adsorption film made of platinum or palladium to adsorb hydrogen molecules, sensing of alcohol components using a PMMA polymer, sensing of smells of foods, and the like. In particular, with a method of detecting a change in the resonance frequency of the cantilever or quartz resonator, when particular molecules are adsorbed to the adsorption film to very slightly change the mass of the film, the resonance frequency of the quartz resonator or cantilever, which has a large resonance Q value, changes by very sensitively responding to the change in the mass. This enables improved sensing.

With the conventional method of sensing gas using a change in the resonance frequency of the cantilever or quartz resonator, the sensor itself is composed of a quartz solid state component or a cantilever of size several tens of $\mu$m to several hundred $\mu$m which is produced by a micromachining technology. This method is thus characterized by enabling a reduction in the size of the sensor and enabling the resonance Q value to be increased as previously described. Consequently, this configuration is excellent in size reduction and sensitivity.

Disadvantageously, the reduced size of the sensor itself as described above sharply reduces the sampling amount of gas to be detected, thus hindering sensitivity from being substantially improved. The current sensor sensitivity needs to be increased by a factor of about 10,000 in order to be practical.

Further, the sensor is such an exclusive device and is thus very expensive. A detecting operation with the sensor also requires technical knowledge. Thus, disadvantageously, inspection costs are high and a long time is required to achieve detection.

More and more interest has been given to health or the like in recent years. Detection of a smell such as a body smell is expected to be an index for the level of health.

To allow the general public, having little technical knowledge, to easily detect a smell, it is necessary to quickly and easily accomplish detection using an inexpensive sensor. However, such a sensor has not been provided yet.

If a sensor is used for such an application, it must detect (a large number of) molecules because a smell is composed of a combination of various molecules. The sensor can have such a configuration when constructed simply by integrating a number of sensors into a unit. However, this in fact increases the size of the sensor. The structure of the sensor also becomes complicated, thus increasing the manufacture costs of the sensor.

An object of the present invention is to provide a technology for inexpensively providing a small-sized, sensitive sensor on the basis of the above technical problems.

To allow the sensor to accomplish efficient, sensitive detections, it is preferable to transfer gas to forcibly feed molecules into a sensor unit.

Transfer of various gases has generally required a technology such as using a fan or the like to cause the gas to flow, using a pump or the like to feed the gas under pressure, or using a vacuumpump or the like to cause differential pressure for sucking gas.

However, with such a technology, it is difficult to transfer a very small amount of gas and to precisely control the flow rate of the gas.

On the other hand, a liquid may be transferred using a pump based on a scheme for driving a diaphragm by a piezoelectric element or an electrostatic actuator.

In connection with the transfer of a liquid, for example, a printer technology based on an ink j et scheme has beenproposed which provides thermal energy to ink (liquid) to generate bubbles to eject droplets (see, for example, Japanese Patent Laid-Open Publication No. 61-59911).

These technologies enable a liquid to be transferred while controlling the flow rate of the liquid on a small amount level.

However, a liquid is the object of the technology based on a pump using a diaphragm as described above, or a scheme for generating bubbles using thermal energy. No technologies have been proposed which transfer gas at a very low flow rate.

All these technologies change the pressure of a liquid to move the liquid. Since gas has a lower density than a liquid, simply applying the above technologies to the gas fails to change its volume and only increases its density even when the gas is subjected to a pressure change similar to that effected on the liquid. This makes it difficult to move the gas. Effecting a pressure change sufficient to move the gas requires an increase in the amount of change in the diaphragm or the like. The above technologies can perform an intermittent operation but have difficulty performing a continuous operation. It is further difficult to transfer the gas at a very low flow rate using the above technologies.

All of the above conventional technologies except the one for generating bubbles using thermal energy include a mechanical movable part. This makes it difficult to avoid reliability degradation resulting from a failure in the movable part or the like. Further, disadvantageously, the movable part may make an operating sound or may be heated during operation. If an attempt is made to apply such a mechanism to the sensor or the like, the detection sensitivity of the sensor may be adversely affected by the operating sound, vibration, heat, or the like of the movable part.

The present invention is made on the basis of these technical problems. An object of the present invention is to provide a technology which can precisely transfer even a very small amount of gas and which offers a high reliability.

SUMMARY OF THE INVENTION

To accomplish the above object, the present invention provides a molecule detection sensor characterized by comprising a condensation pump that externally sucks a fluid such as atmosphere gas to condense the fluid, an adsorbing unit that adsorbs molecules contained in the fluid condensed by the condensation pump, a molecule recognizing unit that recognizes a particular type of molecules of those adsorbed by the adsorbing unit when these molecules are attached or adsorbed to the adsorbing unit to change a resonance characteristic of the molecule recognizing unit, and a detection unit that detects the change in resonance of the molecule recognizing unit to detect the molecules, and in that at least the condensation pump, adsorbing unit, and molecule recognizing unit are integrally formed on a substrate.

In this molecule detection sensor, at least the condensation pump, adsorbing unit, and molecule recognizing unit are integrally formed on the substrate. This enables the molecule detection sensor to be manufactured on one chip to reduce its size. Further, application of a MEMS (Micro Electro Mechanical Systems) technology or semiconductor manufacturing technology enables a further size reduction as well as mass production, which leads to a cost reduction.

The condensation pump condenses the fluid to enable the detection sensitivity of the molecule detection sensor to be improved. In this case, the condensation pump comprises a pump main body in which a flow passage is formed to externally pump the fluid into the adsorbing unit, a volume change (pressure change) generating unit that changes the volume (pressure) of the fluid in the flowpassage, and a counter-flow reducing unit that hinders the fluid from moving away from the detection unit in the flow passage when the volume change generating unit changes the volume of the fluid. This provides a configuration free from a movable part, enabling the sensor to be mounted on the substrate and achieving a high reliability.

The molecule recognizing unit recognizes the molecules when the molecules are attached or adsorbed to the adsorbing unit to change the resonance characteristic of the molecule recognizing unit. An example of such a molecule recognizing unit comprises a cantilever- or disk-like resonator and a molecule adsorption film (sensitive film) provided thereon that adsorbs the particular type of molecules. This molecule recognizing unit thus detects adsorption of the molecules on the basis of a change in the condition of the resonator when the molecules are adsorbed to the molecule adsorption film. Molecules adsorbed to the molecule adsorption film increase the mass of the film. Thus, with the cantilever-like resonator, deflection amount or resonance frequency changes to enable the adsorption of the molecules to be detected. When the molecules adsorbed to the molecule adsorption film increase the mass of the film, the resonance frequency of a system consisting of the resonator and molecule adsorption film changes. This makes it possible to detect whether or not the particular type of molecules has been adsorbed and/or the amount of molecules adsorbed.

Another scheme is a molecule adsorption film provided in a quartz resonator so that adsorption of the particular type of molecules is detected on the basis of a change in the resonance frequency of the quartz resonator which occurs when the molecules are adsorbed to the molecule adsorption film.

Of course, a molecule recognizing unit based on another scheme may be adopted as required.

The molecule detection sensor of the present invention may further comprise a molecular weight analyzing unit that analyzes the molecular weight of molecules adsorbed by the adsorbing unit. Gas chromatography can be suitably utilized for this molecular weight analyzing unit. The gas chromatography can be implemented by forming a column or capillary on a substrate. Such a molecular weight analyzing unit allows the molecule recognizing unit to recognize molecules on the basis of a change in resonance characteristic caused by attachment or adsorption of the molecules of which molecular weights have been analyzed by the molecular weight analyzing unit. The time from adsorption of molecules until they are desorbed varies depending on the molecular weight. This can be utilized with the gas chromatography to identify the type of the molecules. This makes it possible to extract only the particular type of molecules to allow the molecule recognizing unit to recognize the presence or amount of the molecules.

The molecular weight analyzing unit is not an essential arrangement.

A multitude of molecule recognizing units with different sensitivities may be provided. In this case, the detection unit uses a molecule recognizing unit with a higher sensitivity to recognize molecules if a molecule recognizing unit with a lower sensitivity cannot recognize them. This makes it possible to widen the dynamic range of the molecule detection sensor to improve its practicality. In this case, for the molecule recognizing units with different sensitivities, at least two levels of sensitivity may be set. To allow the molecule recognizing units to have different sensitivities, it is possible to vary the surface areas of the molecule recognizing units or to vary the volume ratio (weight ratio) of the molecule adsorption film to the resonator.

Plural types of molecule recognizing units maybe provided which adsorb different types of molecules or allow different types of molecules to attach to themselves. This not only enables the various types of molecules to be recognized but also enables the detection unit to identify a combination of molecules contained in the fluid on the basis of the type of the molecule recognizing unit having recognized the molecules. Consequently, the substances contained in the fluid can be identified.

This molecule detection sensor senses gas, biological molecules, suspended molecules in a living space, volatile molecules, or the like as a particular type of molecules. For example, the molecule detection sensor may be used as a gas detection sensor which detects the presence of a potentially explosive or toxic gas or the like, or its quantitative concentration. Such a molecule detection sensor is installed in a facility, equipment or apparatus that handles gas or the like to control gas leakage or gas amount. The molecule detection sensor is also applicable to monitoring of a hydrogen station for fuel cells for which much developing effort has been made, or a vehicle, apparatus, or instrument using fuel cells, for hydrogen leakage.

The following are other possible applications of the molecule detection sensor that adsorbs a particular type of molecules or plural types of molecules having particular characteristics or features to detect adsorption of the molecules or their amount: analysis of freshness or components of foods, environmental control for providing and maintaining a comfortable space, and sensing of conditions of a living organism such as a human body. The following are also possible by accurately sensing various substances from a human body, exhalation, or metabolic components of enteric flora: monitoring of health conditions, simple screening of diseases, diagnosis of disorder of bad living habits, and monitoring of an infection.

What is called global recognition is also possible, that is, a group of molecules having a particular characteristic or the same side chain can be detected. The molecule detection sensor of the present invention can execute similar functions on liquids instead of gas.

The molecule detection sensor of the present invention in product form is not limited to a conventional commercial sensor but may be a small-sized, stable, and sensitive domestic or personal sensor or a portable, disposable sensor.

A gas transferring pump of the present invention is characterized by comprising a chamber formed in the pump, a first channel formed to allow the chamber to communicate with an exterior of the pump, a second channel formed to allow the chamber to communicate with the exterior of the pump at a position different from that for the first channel, a first reduced diameter portion formed between the chamber and the first channel and having an inner diameter gradually decreasing from the first channel toward the chamber, a second reduced diameter portion formed between the chamber and the second channel and having an inner diameter gradually decreasing from the chamber toward the second channel, and temperature changing means for changing the temperature in the chamber.

In the gas transferring pump, the temperature changing means repeatedly raises and lowers the temperature in the chamber. This expands and contracts the gas in the chamber to vary the volume of the gas due to the pressure change of the gas. During expansion, gas tends to flow from the first and second reduced diameter portions, formed opposite the chamber, toward the exterior of the chamber. However, the first reduced diameter portion has the inner diameter gradually decreasing from the first channel toward the chamber and has the reduced inner diameter in the chamber. The second reduced diameter portion has the inner diameter gradually decreasing from the chamber toward the second channel and has the increased inner diameter in the chamber. A variation in pressure loss in this portion allows the gas to flow out more readily from the second reduced diameter portion than from the first reduced diameter portion. On the other hand, the contracted gas sucks in gas outside the chamber through the first and second reduced diameter portions into the chamber. On this occasion, the gas sucks in the external gas more readily through the first reduced diameter portion than through the second reduced diameter portion.

Thus, the raised temperature in the chamber causes the gas in the chamber to flow out toward the second channel. The lowered temperature in the chamber causes the gas to flow in to the chamber through the first channel. Repeatedly raising and lowering the temperature in the chamber enables the gas to be transferred from the first channel toward the second channel. In this case, in the pump, the gas is not subjected to a phase change and is transferred as it is. A temperature change enables the pressure of the gas to be changed more easily than the use of a diaphragm or the like. This enables the gas to be reliably transferred even if it has a very low flow rate (flow speed) relative to the conventional f low rate (flow speed) level.

This gas transferring pump can be used for various applications. For example, the gas transferring pump may be used in a detection sensor that detects a particular type of substance; the gas transferring pump pumps a gas containing a substance to be detected, into an adsorbent that adsorbs the substance, a molecule (gas molecule) recognizing material, or the like. By thus forcibly pumping the gas containing the substance into the adsorbent, it is possible to improve the sensitivity with which the particular substance is detected or to reduce the time required for measurement. The gas transferring pump can also be used for various other applications; the gas transferring pump transfers gas to generate an air current to cool various instruments. The gas transferring pump of the present invention is not intended to have limited applications. In any case, the present invention is effective if gas is transferred at a very low flow rate or if the size of the gas transferring pump is to be sharply reduced, for example, as being micro-sized.

The temperature changing means may comprise a heater that changes the temperature in the chamber and a controller that changes the heating temperature of the heater.

The heater is preferably provided in an area corresponding to the chamber. In a gas transferring pump dealing with very low flow rates, the heater has a thin pattern. To increase the amount of heat generation, the heater is preferably formed to have a zigzag pattern to increase the area (space factor) of the heater in the portion corresponding to the chamber.

The controller may be provided integrally with or separately from a substrate on which the heater and chamber are formed.

However, the present inventors have found that with a fine heater pattern of width smaller than 100 $\mu$m, the above structure is likely to result in rupture of the heater around a folded portion of the pattern.

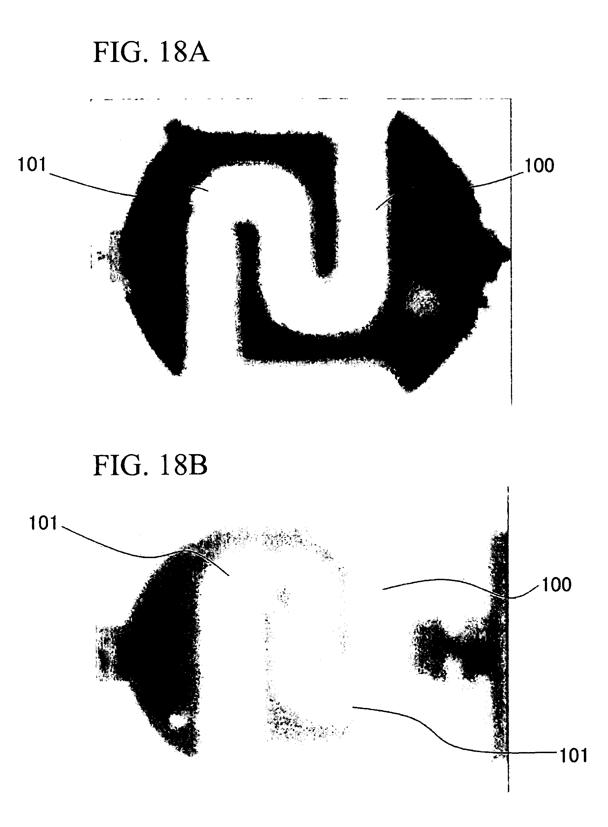

FIG. 18 is a photograph showing a heater 100 which has a pattern of width 26 $\mu$m and which was broken when a 100-mA current was passed through the pattern. It was observed that in some cases, a folded potion 101 of the zigzag heater 100 was broken from its inner circumference to outer circumference as shown in FIG. 18A. In other cases, the heater 100 was broken from one of the adjacent folded portions 101 to other as shown in FIG. 18B.

The cause of the rupture is expected to be as follows.

In the folded portion 101 of the heater 100, the inner circumference has a smaller circumferential length (length in a circumferential direction, that is, the length over which a current flows) than the outer circumference. Consequently, when a current is passed through the heater 100, the folded portion 101 offers a smaller resistance in a direction in which the current flows. Therefore, a larger current flows along the inner circumference in a concentrated manner to increase the temperature of inner circumference of the folded portion 101 of the heater 100 compared to that of the outer circumference.

This tendency is particularly marked if the heater has a smaller thickness even if it is made of metal. The cause is expected to be insufficient heat transfer in a lateral direction (sectional direction) resulting in a failure to dissipate local heat generated by a concentrated current.

The difference in temperature between the inner circumference and the outer circumference stresses the heater 100. The stress then becomes excessively high to break the heater 100 as shown in FIG. 18A. Further, the inner circumferences of adjacent folded portions 101 of the heater 100 are so hot that the temperature increases along the shortest path between the folded portions 101. This also stresses and breaks the heater 100 as shown in FIG. 18B.

As a result of examinations based on the above inference, the present inventors have come to the belief that a rise in the temperature of inner circumference of the folded portion of the heater can be suppressed by increasing the width of the folded portion.

With a current of the same intensity, heat generation increases with decreasing width of the folded portion. In contrast, the heat generation decreases with increasing width of the folded portion. The resistance of the heater decreases with increasing sectional area of the heater. Given two wires with different sectional areas, with the same current passed, the wire with the larger sectional area provides lower power and thus causes a smaller increase in temperature. This also applies to a single continuous heater pattern. The increase in temperature decreases with increasing sectional area (width) of the heater pattern (given a fixed thickness, the sectional area is determined by the width).

The present inventors expect that if the heat generation in the folded portion of the heater can be reduced by increasing the width of the folded portion, it is possible to avoid an excessive increase in the temperature of the inner circumference that is sufficient to break the heater.

Theportionof the heater different from the foldedportion, a linear portion, is unlikely to be broken even if it has a smaller sectional area (width) than the folded portion. In the foldedportion, the temperature rising speedvaries between the inner and outer circumferences owing to a variation in current density or the like as described above. As a result, a temperature gradient exists in a radial direction. When a temperature gradient per unit length (dimension) is large, a gradient in thermal expansion becomes steep and this causes rupture. In contrast, in the linear portion, the above temperature gradient is unlikely to occur. Passage of a current uniformly raises the temperature. This avoids a possible local increase in temperature and thus a possible rupture in spite of a smaller sectional area.

Thus, the gas transferring pump of the present invention is characterized in that the heater is formed by alternately connecting together serially linear portions and folded portions, in the area corresponding to the chamber, and in that the maximum width W2 of the folded portion is larger than the width W1 of the linear portion. Importantly, increasing the width of the entire pattern of the heater reduces the maximum temperature for a given current of the heater itself. Accordingly, the width of only the folded portion, which may be damaged, is increased.

This configuration is particularly effective on a fine heater pattern having a width of smaller than 100 $\mu$m and can effectively prevent the heater from being broken.

This configuration is also applicable as a desorption heater that desorbs attached or adsorbed molecules in the adsorbing unit,molecule recognizing unit,and detection unit. In this case, the pump preferably comprises a desorption heater that desorbs attached or adsorbed molecules in at least one of the adsorbing unit, molecule recognizing unit, and detection unit, the desorption heater being formed by alternately connecting together serially linear portions and folded portions, the maximum width W2 of the folded portion being larger than the width W1 of the linear portion.

In the above heater or desorption heater, the width W1 of the linear portion and the maximum width W2 of the folded portion preferably meet the relation:

$$1 < W2/W1 < 5.$$

W2/W1 in excess of 5 excessively increases the width of the folded portion to reduce the length of the linear portion of the heater in the area corresponding to the chamber. Increasing the maximum width of the folded portion suppresses a rise in the temperature of the foldedportion. Consequently, heating of the chamber is mainly executed by the linear portion of the heater. Therefore, the length of the narrow linear portion is preferably maximized to increase the heating efficiency of the heater provided in the area corresponding to the chamber. In this case, it is desirable to avoid an excessive increase in the width of the folded portion. Thus, the preferable range of W2/W1 is:

$$1.2 < W2/W1 < 1.5.$$

As previously described, the length of linear portion of the heater is preferably maximized. However, the length L of the linear portion needs to be equal to or smaller than the inner diameter D of the chamber. That is, preferably, the length L of the linear portion needs to be equal to or smaller than the inner diameter D of the chamber, the maximum width W2 of the folded portion is set larger than the width W1 of the linear portion, and the length L is set at its maximum value.

The pump may further comprise a flow rate sensor that detects the flow rate of gas passing through the pump. In this case, the flow rate sensor is preferably provided near a gas flow passage comprising a first channel, a first reduced diameter portion, a chamber, a second reduced diameter portion, and a second channel. The flow rate sensor detects a change in the temperature in the flow passage and/or the temperature change of the sensing element due to convection and thus the flow rate of gas. Moreover, the flow rate sensor is preferably provided near the first channel and/or first reduced diameter portion and near the second channel and/or second reduced diameter portion where the flow speed is at maximum. Differences among outputs from the flow rate sensors are preferably detected to, for example, enable noise to be removed.

In this gas transferring pump, the first channel, first reduced diameter portion, chamber, second reduced diameter portion, and second channel canbe formed on a silicon substrate by a lithography process. This provides a very small gas transferring pump and also enables mass production at low prices.

Silicon has excellent characteristics such as a high thermal conductivity, a high machinability, and low costs. However, instead of silicon, any glass-, resin-, or ceramics-based material may be used to form a first channel, a first reduced diameter portion, a chamber, a second reduced diameter portion, and a second channel. For the glass- or resin-based material, the pattern may be formed by the lithography process or a mold or imprint process.

It is possible to form several sets of the first channel and first reduced diameter portion and several sets of the second channel and second reduced diameter portion.

The gas transferring pump has a very simple structure and has no movable part. The gas transferring pump is thus unlikely to fail, is very durable and reliable, and does not involve any operating sound or the like.

A detection sensor of the present invention comprises a detection unit that detects a substance contained in gas and having a mass and a pump that pumps the gas into the detection unit. The pump is characterized by comprising a pump main body in which a flow passage is formed to externally pump gas into the detection unit, a volume change (pressure change) generating unit that changes the volume (pressure) of the gas in the flow passage, and a counter-flow reducing unit that hinders the gas from moving away from the detection unit in the flow passage when the volume change generating unit changes the volume of the gas.

The volume change generating unit comprises a heater and a controller that changes the temperature of the heater. The heater is formed by alternately connecting together serially linear portions and folded portions in the area corresponding to the volume change generating unit. The maximum width W2 of the folded portion is larger than the width W1 of the linear portion.

When the volume change generating unit changes the volume of gas (due to the pressure change of gas), the counter-flow reducing unit hinders the gas from moving away from the detection unit in the flow passage. The gas thus moves toward the detection unit in the flow passage. The pump main body can thus externally pump the gas into the detection unit through the flow passage.

In this case, preferably, the pump main body has a chamber, and the volume change (pressure change) generating unit changes the volume (pressure) of the gas in the chamber. The counter-flow reducing unit is preferably composed of reduced diameter portions formed in front of and behind the chamber and in which the inner diameter of the flow passage gradually decreases in the direction in which the gas moves. The counter-flow reducing unit composed of the very small reduced diameter portions increases the flow passage resistance to the gas. Thus, several flow passages each comprising the counter-flow reducing unit may be formed in parallel. In this case, the flow passages may be formed radially around the chamber or in parallel.

The volume change (pressure change) generating unit preferably changes the volume (pressure) of gas by changing its temperature in the flow passage.

BRIEF DESCRIPTION OF THE DRAWINGS

FIG. 1 is a diagram showing the configuration of a sensor according to the present embodiment;
FIG. 2 is a sectional view of the sensor;
FIG. 3 is a diagram conceptually showing the configuration of a pump;
FIG. 4 is a diagram showing the configuration of the pump;
FIG. 5 is a sectional view of the pump;
FIG. 6 is a diagram showing the configuration of a heater;
FIG. 7 is a diagram showing another example of the sensor;
FIG. 8 is a diagram showing another example of the sensor;
FIG. 9 is a diagram of a basic heater used for simulation analysis in an example;
FIG. 10 is a diagram showing the analysis of a distribution in the temperature of the heater based on a finite element method;
FIG. 11 is a diagram showing the analysis of a variation in the temperature of the heater based on the finite element method;
FIG. 12 is a diagram showing the analysis of temperature distribution of the heater based on a finite differential method;
FIG. 13 is a diagram showing the analysis of distribution of current density in the heater based on the finite differential method;
FIG. 14 is a diagram of a heater used to demonstrate the conf iguration of the heater according to the present invention;
FIG. 15 is a diagram showing the analysis of a temperature distribution based on the finite differential method;
FIG. 16 is a diagram showing the analysis of temperature distributions observed a given time after passage of a current through the heater, wherein FIG. 16A shows a temperature distribution obtained 100 $\mu$s after passage of a 100-mA current and FIG. 16B shows a temperature distribution obtained 1.5 ms after passage of a 50-mA current;
FIG. 17 is a diagram showing the analysis of temperature changes observed when currents of different magnitudes are passed through the heater, wherein FIG. 17A shows a temperature change observed when a 100-mA current is applied, FIG. 17B shows a temperature change observed when a 20-mA current is applied, and FIG. 17C shows a temperature change observed when a 10-mA current is applied; and

FIG. 18 is a microscopic photograph image showing an actual example of a broken heater, wherein FIG. 18A shows that a folded portion of a zigzag heater is broken from its inner circumference to outer circumference, and FIG. 18B shows that the heater is broken from one of adjacent folded portions to the other.

DETAILED DESCRIPTION OF THE PREFERRED EMBODIMENTS

The present invention will be described below in detail with reference to embodiments shown in the accompanying drawings.

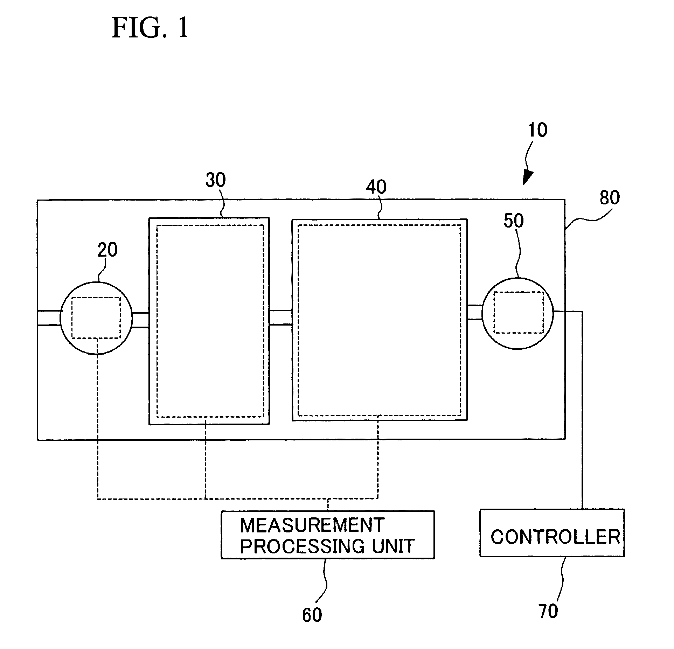

FIG. 1 is a diagram illustrating the general configuration of a sensor 10 according to the present embodiment.

The sensor (molecule detection sensor, detection sensor) 10 shown in FIG. 1 adsorbs a particular type of molecules to be sensed, to detect the presence (generation) of gas itself or a particular substance, smell or the like contained in the gas, or the concentration of the gas, substance, smell or the like. The sensor 10 comprises a pump (condensation pump, pump main body, gas transferring pump) 20 that sucks surrounding atmosphere gas (hereinafter simply referred to as gas (fluid)), an adsorbing unit 30 that adsorbs the gas sucked by the pump 20, agaschromatographyunit (molecularweightanalyzingunit) 40 that separates a particular type of gas components from the gas adsorbed by the adsorbing unit 30, a sensor unit (molecule recognizing unit) 50 that adsorbs a particular type of molecules contained in the separated gas component to detect adsorption of the molecules, a measurement processing unit (detection unit) 60 that determines whether or not the particular type of molecules are present or the amount of the molecules on the level of the detection by the sensor unit 50, and a controller 70 that controls each part of the sensor 10.

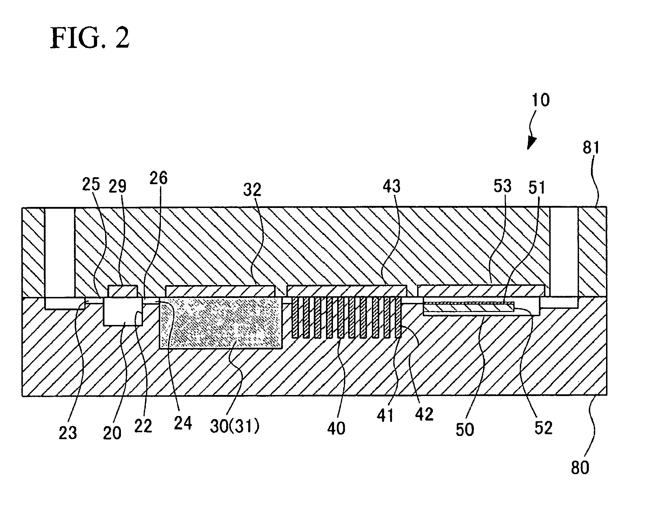

As shown in FIG. 2, the pump 20, adsorbing unit 30, gas chromatography unit 40, sensor unit 50 are mounted by forming a predetermined pattern on a substrate 80 made of Si or SiO$_2$ and stacking a substrate 81 on the substrate 80.

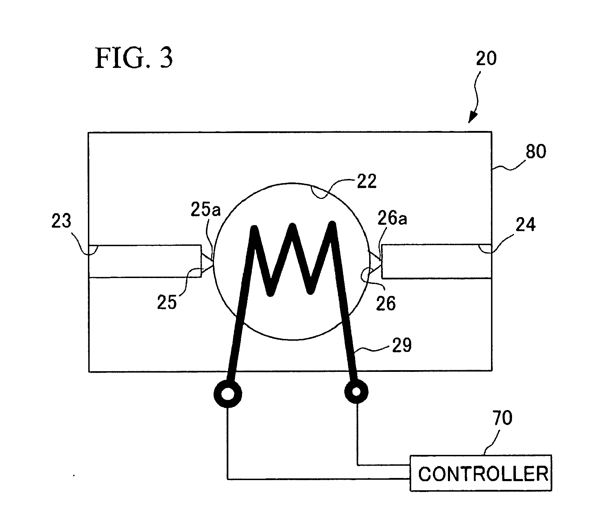

As shown in FIG. 3, the pump 20 is provided with a chamber 22 having a predetermined capacity, an inlet channel (first channel) 23 through which gas is externally introduced into the chamber 22, an outlet channel (second channel) 24 through which the gas is fed out of the chamber 22, an inlet diffuser (first reduced diameter portion, counter-flow reducing unit) 25 provided between the chamber 22 and the inlet channel 23, and an outlet diffuser (second reduced diameter portion, counter-flow reducing unit) 26 provided between the chamber 22 and the outlet channel 24. A heater (volume change generating unit) 29 is provided in the chamber 22.

As shown in FIG. 2, the pump 20 is formed between the substrate 80 and the substrate 81, provided opposite the substrate 80. Both the substrates 80 and 81 are made of silicon. The chamber 22, inlet channel 23, outlet channel 24, inlet diffuser 25, and outlet diffuser 26 are formed by producing recess portions of predetermined shapes on one or both of mating surfaces of the substrates 80 and 81.

As shown in FIG. 3, the chamber 22 has, for example, a circular cross section. The inlet diffuser 25 is formed on one side of the chamber 22. The outlet diffuser 26 is formed on the other side of the chamber 22.

The inlet diffuser 25 is formed to allow the inlet channel 23 to communicate with the chamber 22. The inlet diffuser 25 is shaped like a tapered nozzle having a sectional area (inner diameter) gradually decreasing from the inlet channel 23 toward the chamber 22.

Theoutlet channel 24 is formed contiguous to the adsorbing unit 30, described later in detail. The other end of the outlet channel 24 is formed to be in communication with the outlet diffuser 26. The outlet diffuser 26 allows the chamber 22 to communicate with the outlet channel 24. The outlet diffuser 26 is formed to be open into the chamber 22 at a position different from that for the inlet diffuser 25. The outlet diffuser 26 is shaped like a tapered nozzle having a sectional area gradually decreasing from the chamber 22 toward the outlet channel 24.

Thus, the pump 20 is provided with a gas flow passage from the inlet channel 23 through the inlet diffuser 25, chamber 22, and outlet diffuser 26 to the outlet channel 24.

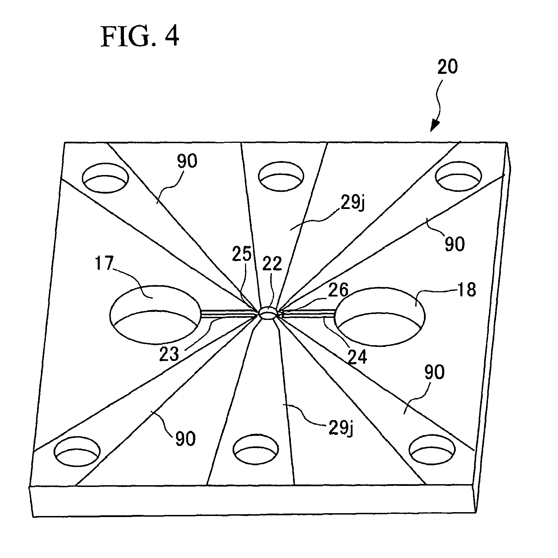

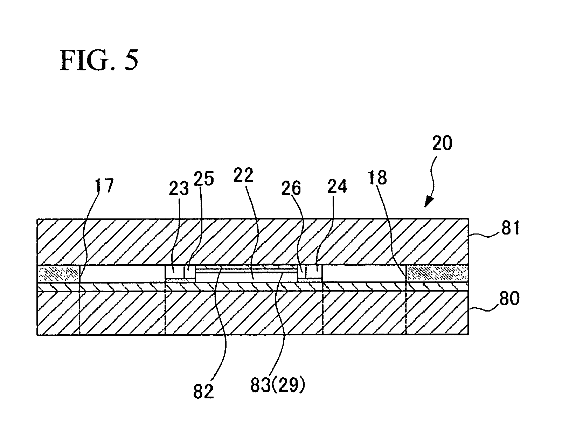

If the pump 20 is used for another application or in another form, ports 17 and 18 may be formed at the inlet channel 23 and outlet channel 24, respectively, so that pipes or the like can be connected to these ports, as shown in FIGS. 4 and 5.

Under the control of the controller 70, a voltage from a power source is applied to the heater 29, described above. The heater 29 thus generates heat to raise the temperature in the chamber 22 to expand the gas. Stopping the application of the voltage to the heater 29 suspends the heat generation by the heater 29. The temperature in the chamber 22 thus lowers to contract the gas. In the pump 20, the heater 29 and controller 70 function as temperature changing means and volume change generating means, respectively. The heater 29 and controller 70 utilizes the expansion and contraction of the gas to feed the gas. This will be described later in detail.

In the pump 20, gas is externally introduced into the chamber 22 through the inlet channel 23 and inlet diffuser 25. The gas is then ejected from the outlet diffuser 26. With the gas introduced into the chamber 22, the heater 29 generates heat to raise the temperature in the chamber 22 to expand the gas. Then, the expanded gas tends to flow out of the chamber 22 through the inlet diffuser 25 and outlet diffuser 26.

The inlet diffuser 25 is shaped like a tapered nozzle having a sectional area gradually decreasing from the inlet channel 23 toward the chamber 22. The outlet diffuser 26 is also shaped like a tapered nozzle having a sectional area gradually decreasing from the chamber 22 toward the outlet channel 24. Thus, pressure loss varies between when the gas flows in the direction in which the sectional areas of the inlet diffuser 25 and outlet diffuser 26 gradually decrease (this direction is hereinafter referred to as a forward direction) and when the gas flows in the backward direction in which the sectional areas gradually increase (from the outlet channel 24 toward the inlet channel 23; this direction is hereinafter referred to as a backward direction). Specifically, in the inlet diffuser 25 and outlet diffuser 26, the pressure loss during the gas flow in the backward direction is larger than that during the gas flow in the forward direction. The reason is as follows. The viscosity of the gas causes turbulent eddies at edges 25a and 26a of the inlet diffuser 25 and outlet diffuser 26. Then, the kinetic energy of the fluid is transformed into thermal energy and dissipates to allow the gas in the inlet diffuser 25 and outlet diffuser 26 to flow more smoothly in the forward direction than in the backward direction.

Thus, if the gas in the chamber 22 expands to flow out of the pump 20, it flows out of the chamber 22 through the outletdiffuser26, whichoffersasmallerresistance (pressure loss).

Subsequently, stopping the application of the voltage to the heater 29 suspends the heat generation by the heater 29. The temperature in the chamber 22 thus lowers to contract the gas. Then, while contracting, the gas is introduced into the chamber 22 through the inlet diffuser 25 and outlet diffuser 26.

As previously described, the pressure loss in the tapered nozzle-like inlet diffuser 25 and outlet diffuser 26 varies depending on the gas flow direction. Consequently, if the gas in the chamber 22 contracts, it is introduced into the chamber 22 through the inlet diffuser 25, which offers a smaller resistance (pressure loss).

Thus, when the heater 29 is activated, the gas in the chamber 22 expands to flow out to the outlet chamber 24 through the outlet diffuser 26. When the heater 29 is inactivated, the gas in the chamber 22 contracts and is introduced into the chamber 22 through the inlet channel 23 via the inlet diffuser 25.

Accordingly, repeatedly activating and inactivating the heater 29 allows gas to be sucked through the inlet channel 23 and ejected through the outlet channel 24. The pump 20 thus functions properly.

Thus, the controller 70 alternately switches on and off the heater 29 at a predetermined cycle. For example, the controller 70 can perform control such that the heater 29 is repeatedly switched on and off at a cycle of 100 microseconds to 1 millisecond. The controller 70 preferably performs control such that as the heater 29 is switched on and off, the temperature varies between the room temperature and 1, 000 °C, preferably between the room temperature and 500 °C.

In this case, increasing the power of the heater 29 increases the difference in temperature between an ON state and an OFF state. This increases the flow rate in the pump 20. Further, an increase in switching frequency increases the flow rate. The difference in temperature between the ON state and the OFF state and the switching frequency may be set as required, depending on the application of the pump 20. For example, if the pump 20 is used for an application involving decomposition of gas at high temperature, it needs to be used at reduced temperature.

Thus, the pump 20 utilizes thermal expansion of gas to reliably change the volume. The gas can thus be reliably transferred even at a very low rate. Further, to transfer the gas, it is only necessary to provide the flow passage comprising the chamber 22, inlet channel 23, outlet channel 24, inlet diffuser 25, and outlet diffuser 26, as well as the heater 29. Consequently, no mechanical movable part is required, improving reliability. It is also possible to avoid a possible operating sound, heat generation due to frictions caused when movable parts are in operation, or the like, which may disadvantageously occur if a movable part is provided.

As shown in FIG. 5, the heater 29, provided on the chamber 22, is a heating wire formed on one surface of the substrate 80 or 81 made of silicon; theheatingwire comprises, for example, a precious metal or high-melting-point metal such as Au, Pt, Cu, Pd, Ir, Cr, Mo, or Ti, or a metal oxide film or semiconductor such as ITO, SnO, single-crystal Si, amorphous Si, organic semiconductor, or poly-Si. The heater 29 is electrically connected via a connection portion 29j to a power source (not shown) placed outside the main body of the pump 20. Of course, the heater 29 can be formed by stacking any of these materials to form a multilayer system. Most preferably, a binder layer 82 comprising Ti, Ta, Tg, or the like is formed on one surface of the substrate 80 or 81, and an electrode layer 83 comprising an oxidation- and heat-resistant metal or alloy such as Pt is formed on the binder layer 82. In this case, the binder layer 82 is used to appropriately form an electrode layer 83 all over the surface of the substrate 80 or 81. Without the binder layer 82, a material forming the electrode layer 83 during film formation may be incompatible with the substrate 80 or 81 and be repelled. To properly provide its functions, the binder layer 82 has only to have the minimum required thickness. On the other hand, the electrode layer 83 needs to have a thickness enough to pass a sufficient current.

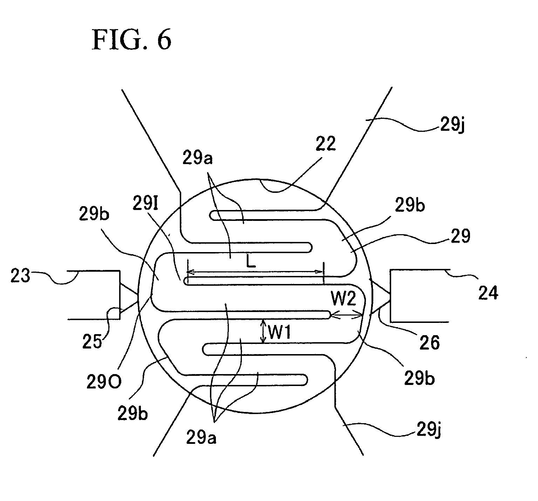

The heater 29 may have any shape as long as it can provide required functions. In view of durability and reliability, the heater 29 is preferably formed in an area corresponding to the chamber 22 so as to have a zigzag folded pattern (shape) as shown in FIG. 6. Specifically, the heater 29 is formed of serially connected linear portions 29a and folded portions 29b. The linear portions 29a and folded portions 29b are alternately connected together to generally form a zigzag shape.

The linear portions 29a are thus arranged at a spacing of, for example, 5 to 15 $\mu$m so that, for example, the width W1 is about 20 to 30 $\mu$m and so that the adjacent linear portions 29a, 29a are parallel to each other.

The maximum width W2 of the folded portion 29b is preferably set so that W2 > W1. The folded portion 29b is more preferably formed so that 1 < (W2/W1) < 5, more preferably 1.2 < (W2/W1) < 1.5.

As previously described, the inner circumference 29I of the folded portion 29b is shorter than its outer circumference 29O. Consequently, when a current is passed through the heater 29, a smaller resistance is offered in the direction in which the current flows. As a result, a larger current flows along the inner circumference 29I in a concentrated manner. With a current of the same intensity, the heat generation increases with decreasing width W2 of the folded portion 29b. The heat generation can thus be reduced by increasing the width W2 of the folded portion 29b. Accordingly, an increase in the width W2 of the folded portion 29b enables a reduction in the heat generation of the heater 29 at the folded portion 29b. Even if the temperature of inner circumference 29I of the folded portion 29b rises, it is prevented from increasing excessively enough to break the heater 29.

Moreover, the temperature in the folded portion 29b is higher on the inner circumference 29I. The folded portion 29b is formed so that its width W2 is relatively long

Accordingly, in this part, the length from the inner circumference 29I to the outer circumference 29O is large enough to enable a reduction in the corresponding temperature gradient. As a result, even with a rise in the temperature of inner circumference 29I of the foldedportion 29b, the heater 29 can be prevented from being broken from the inner circumference 29I, having the highest temperature, toward the outer circumference 29O.

Even with the fine pattern of the heater 29, the suppressed rise in the temperature of the inner circumference 29I makes it possible to prevent heater 29 from being broken between the two folded portions 29b, 29b located adjacent to each other across the linear portion 29a.

With the pattern of the folded portions 29b of the heater 29 configured as described above, it is preferable to maximize the length L of the linear portion 29a in the area corresponding to the chamber 22. This increases the heat generation of the heater 29.

The pump 20 may further comprise a flow rate sensor 90 that measures the flow rate of ejected gas. The flow rate sensor 90 is placed near at least one of the inlet diffuser 25andoutletdiffuser26. A constant current is always applied to the flow rate sensor 90 to maintain it at a predetermined temperature.

Gas flowing through the flow passage reduces the temperatures of the inlet diffuser 25 and outlet diffuser 26. This also reduces the temperature of the flow rate sensor 90. Accordingly, monitoring a change in electric resistance makes it possible to detect a decrease in the temperatures of the inlet diffuser 25 and outlet diffuser 26. Thus, with the relationship between the flow rate and the amount of decrease in the temperatures of the inlet diffuser 25 and outlet diffuser 26 predetermined, the flow rate sensor 90 can detect the flow rate of gas ejected from the pump 20.

To improve sensitivity, any of various configurations can be used for the arrangement of the flow rate sensor 90 and the processing of output signals from the flow rate sensor 90. For example, the flow rate sensor 90 may be provided in each of the inlet diffuser 25 and outlet diffuser 26 so that the difference between outputs from the two flow rate sensors can be determined. This enables the detection of absolute value of the flow rate and the removal of noise components. Further, determining response characteristics enables noise or draft components to be removed.

To form this pump 20, the chamber 22, inlet channel 23, outlet channel 24, inlet diffuser 25, outlet diffuser 26, and the like are formed on the substrate 80 constructed by stacking an oxide layer and a photo resist layer by forming a pattern by a lithography process.

First, the pattern of the chamber 22, inlet channel 23, outlet channel 24, inlet diffuser 25, and outlet diffuser 26 is formed in the oxide layer of the substrate 80 by the lithography process.

Subsequently, with the inlet diffuser 25 and outlet diffuser 26 masked, the chamber 22, inlet channel 23 , and outlet channel 24 are etched to predetermined depths.

The inlet diffuser 25 and outlet diffuser 26 are further unmasked and etched to predetermined depths.

A conductive layer comprising of a conductive material such as gold is formed in the other substrate 81. Wiring patterns for the heater 29 and flow rate sensor 90 are formed in the conductive layer by the lithography process and etching.

The substrates 80 and 81 are then laminated to each other to form a pump 20.

Care must be taken to design the material, board thickness, and the like of the substrate 81, on which the heater 29 and the flow rate sensor 90 are provided. For example, heat conduction can be increased by employing a material with a high heat conductivity and reducing the board thickness. This configuration enables an increase in the switching frequency associated with ON and OFF of the heater 29 and in the flow rate of the pump 20.

Gas ejected from the outlet channel 24 in the pump 20 is pumped into the adsorbing unit 30, in which the gas is condensed.

The adsorbing unit 30, which adsorbs the gas pumped by the pump 20, is formed of, for example, an adsorption film composed of an organic material or an adsorption film 31 composed of an inorganic material. The adsorbing unit 30 adsorbs molecules from the gas by physical adsorption at a low selectivity.

The adsorption film 31, formed of the organic material, adsorbs molecules by chemically reacting with them and thus exhibits an excellent adsorbing performance. However, molecules adsorbed to the adsorption film 31 are difficult to desorb. Consequently, it is difficult to stably use the adsorption film 31 for a long period.

On the other hand, molecules adsorbed to the inorganic material can be easily desorbed by heating the material. The ability to desorb molecules is important for the sensor 10 of the present invention because with the sensor 10, molecules contained in the gas are sequentially fed downstream from the pump 20. Thus, the inorganic material is preferably used as the adsorbing unit 30. However, the inorganic material is inferior to the organic material in adsorbing performance. Thus, the adsorption film 31 is preferably provided with a sufficient surface area to adsorb an appropriate amount of molecules. The adsorption amount can also be increased by allowing the gas to contact the adsorption film 31 for a sufficiently long time. A typical example of the inorganic material is titanium dioxide ($TiO_2$), which is preferably made porous in order to increase its adsorption efficiency.

A heater (desorption heater) 32 is provided on a bottom or top surface of the adsorption film 31. The heater 32 is formed of a material similar to that of the heater 29. The heater 32 is electrically connected to a power source (not shown) placed outside the substrate 80. Application of a voltage from the power source (not shown) to the heater 32 is controlled by the controller 70.

The gas pumped out by the pump 20 comes into contact with the adsorption film 31. Molecules (composed mostly of volatile organic compounds) contained in the gas are then adsorbed to the adsorption film 31. Then, under the control of the controller 70, a voltage from the power source is applied to the heater 32, which then generates heat. This volatizes the molecules adsorbed to the adsorption film 31 to desorb them from the adsorption film 31.

The pump 20 is operated for a predetermined time to allow the adsorption film 31 to adsorb molecules from the gas pumped into the adsorbing unit 30 during the operation. The sampling amount of the gas can be determined by the operation time of the pump 20, that is, the length of time for which the adsorbing unit 30 keeps on adsorbing molecules.

In the gas chromatography unit 40, provided downstream of the adsorbing unit 30, grooves 41 are formed in the substrate 80 so as to serve as columns or capillaries. The columns or capillaries are thus formed of the material of the substrate 80, Si or $SiO_2$. This serves as a fixed phase. The grooves 41 are formed as follows. A predetermined photo resist process is executed on the substrate 80. A technology such as RIE (Reactive Ion Etching) is then used to form grooves 41 of, for example, depth 50 to 100 $\mu$m and width 5 to 20 $\mu$m. Here, Si reacts with other metal even at relatively low temperatures. Consequently, the grooves 41 are internally oxidized to form an oxide film on the surfaces of the grooves. A barrier film of $SiN_4$ or the like may be formed as required.

The grooves 41, constituting columns or capillaries, are filled with a gas adsorbing material 42. Examples of the gas adsorbing material 42 include an oxide of micronized carbon, silicon, metal (aluminum, zinc, tin, or titanium) or the like, an also micronized polymer, and nanoparticles with their surfaces coated with metal. The gas adsorbing material 42 may evenly adsorb all types of gas or selectively adsorb a somewhat particular type of gas depending on the scheme used. Micronized carbon is suitable for homogeneous adsorption. Powdered polymer is suitable for the selective adsorption. The surface area of the gas adsorbing material 42 is preferably increased to improve its adsorption efficiency. This requires a decrease in the size of particles or pores in ceramics.

In the preferable integrating process for the gas adsorbing material 42, for example, silicon or a metal oxide is dissolved in a solvent of xylene or the like using an organic metal or a sol-gel process, to form a film by a spin-on process, and then to execute sintering. However, any other manufacture method and material may be used on the basis of the relationship with other devices formed on the substrate 80.

The gas chromatography unit 40 comprises a heater (desorption heater) 43 formed of a material similar to that of the heater 29. The heater 43 heats the grooves 41, constituting columns or capillaries, to a predetermined temperature to volatize (desorb) molecules adsorbed to the gas adsorbing material 42. The molecular weight is then analyzed. Specifically, molecules with a lighter weight escape quickly from the columns or capillaries of the grooves 41, whereas a longer time is required for molecules with a heavier weight to escape from the grooves 41. The molecular weight can thus be analyzed on the basis of the (difference in) escape time of the molecules.

The sensor unit 50 comprises an adsorption film 51 that adsorbs molecules contained in the gas separated by the gas chromatography unit 40 and a resonator 52 that detects adsorption of molecules to the adsorption film 51.

The adsorption film 51 may be formed of an organic or inorganic material similarly to the adsorbing unit 30. Also in this case, molecules adsorbed to the inorganic material can be easily desorbed, for example, by using the heater 53 to heat the material. Accordingly, the inorganic material is preferably used as the adsorption film 51 in the sensor 10 of the present invention. The adsorption film 51 is preferably provided with a sufficient surface area to adsorb an appropriate amount of molecules. The adsorption amount can also be increased by allowing the gas to contact the adsorption film 51 for a sufficiently long time.

Candidates for the organic material include films comprising any polymer such as polyacrylic acid, polystyrene, polyacrylamine, polydimethylsiloxane, polyvinyl chloride, or polymethyl methacrylate. The selectivity for molecules is determined by various factors such as a functional group forming a polymer and a crosslinking condition.

The adsorption film 51 is classified into a global recognition material and a selective recognition material in terms of functions.

The global recognition material is a polymer which does not offer a high selectivity but which adsorbs a particular group of molecules, for example, alcohol or ether. Such a polymer can be formed into nanofibers or made porous so as to increase its surface area. Forming the polymer into nanofibers means making the polymer into fibers of size (length and thickness) several nanometers to several hundred micrometers in order to drastically improve the adsorptivity of the polymer, which exhibits different adsorption characteristics for the respective types of molecules.

Examples of the selective recognition material include a biological material as causes an antigen-antibody reaction, a combination of an acceptor and a receptor, and a probe having a particular base sequence that hybridizes with a gene, DNA, or RNA. The selective recognition material may also be a lipid double film.

The adsorption film 51 is preferably formed on the surface of the resonator 52.

The resonator 52 may be of a cantilever type having a fixed base end or of a disk type which is generally circular or rectangular or which has any other shape as required.

The resonator 52 comprises a driving source (not shown) that drives the resonator 52. The driving source is based on a capacitance scheme, a piezo driving scheme, or the like. All these schemes operate the resonator 52 at a predetermined frequency. The measurement processing unit 60 has a driving circuit (not shown) used for this purpose.

With the resonator 52 operated at a predetermined frequency by the driving source, when a detection target such as molecules having a mass is attached to the adsorption film 51, the resonance frequency of the resonator 52 is changed.

The sensor unit 50 is provided with a heater (desorption heater) 53 formed of a material similar to that of the heater 29. The heater 53 enables molecules adsorbed to the adsorption film 51 to be desorbed.

The sensor unit 50 detects a change in the resonance frequency of the resonator 52.

On the basis of the capacitance scheme or the like, the sensor unit 50 can detect a change in the resonance frequency of the resonator 52 to provide the corresponding electric signal. In this example, a change in the resonance frequency of the resonator 52 is detected on the basis of electrostatic capacitance. However, the detection method may involve the electrostrictive strain of a piezoelectric element or the piezo effect of silicon or a piezoelectric element.

The measurement processing unit 60 receives an electric signal output by the sensor unit 50 to detect a change in the electric signal. The measurement processing unit 60 thus determines whether or not a particular type of molecules has been adsorbed to the adsorption film 51 or measures the amount of molecules adsorbed. The sensor 10 can preferably output the measurement result by the measurement processing unit 60 by turning on or off a lamp, buzzer or the like or displaying measured values or levels.

The controller 70 controls each part of the sensor 10. For example, the controller 70 controls operation of the resonator 52 and the heaters 29, 32, 43, and 53, which volatize molecules or components adsorbed to each part of the sensor 10.

With the sensor 10, under the control of the controller 70, the pump 20 sucks and condenses surrounding gas. The adsorbing unit 30 then adsorbs molecules contained in the gas. The gas chromatography unit 40 separates a particular type of molecules from the molecules adsorbed to the adsorbing unit 30. The adsorption film 51 in the sensor unit 50 adsorbs the separated particular type of molecules. The adsorption of the molecules to the adsorption film 51 is detected in the sensor unit 50. On the basis of the detection level, the measurement processing unit 60 determines the presence of a particular type of molecules or measures the amount of molecules adsorbed. This enables the detection of presence of a particular type of molecules or the measurement of amount of molecules adsorbed. This in turn makes it possible to detect the presence of a particular gas, smell, substance or the like or its amount or concentration.

The controller 70 can also perform control such that the sensor 10 detects several types of molecules or such that the detection dynamic range is widened.

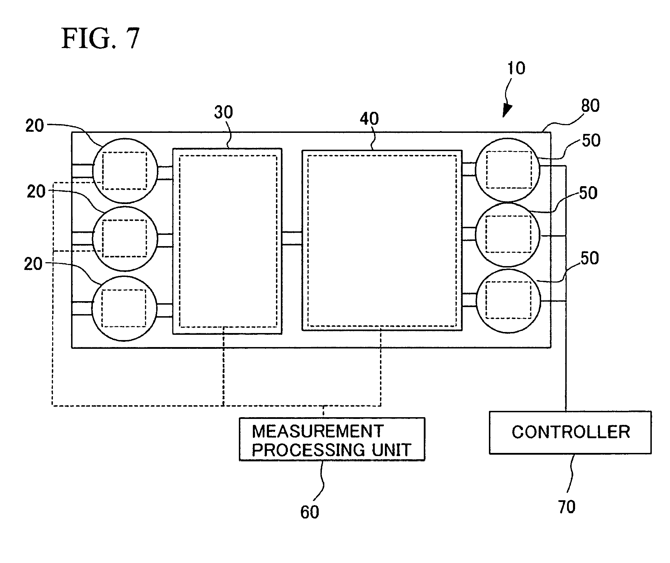

To detect several types of molecules, different sensor units 50 are provided as shown in FIG. 7. The adsorption films 51 in the sensor units 50 adsorb different types of molecules.

In this case, when the adsorption film 51 adsorbs molecules, one of multiple resonators 52 corresponding to the different components of the gas has its resonance frequency changed. Thus, the controller 70 can identify the type of one of the different sensor units 50 which includes the adsorption film 51 having adsorbed the molecules, or the amount of molecules detected. On the basis of the combination of these molecules, the controller 70 can then identify the detected substance.

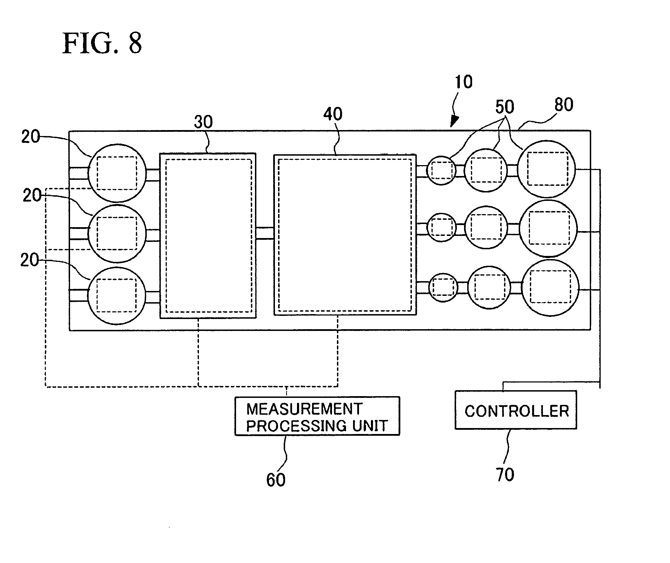

Further, the detection dynamic range of the sensor 10 can be widened as described below. Different sensor units 50 are provided as shown in FIG. 8. In this case, the various resonators 52 are provided with different sensitivities by varying the weight, size, or material of the resonator 52, or the area or volume ratio of the resonator 52 to the adsorption film 51.

The controller 70 starts a detecting operation with, for example, the sensor unit 50 with the lowest sensitivity. When the amount of a change in the resonance frequency caused by the adsorbed molecules is less than a given value, the controller 70 sequentially switches the sensor unit 50 to the one with the next higher sensitivity. This widens the dynamic range to enable sensitive molecule detection.

The sensor 10 can thus detect the presence of a particular type of molecules or measure the amount of molecules. This makes it possible to detect the presence of a particular gas or substance or its amount or concentration. In this case, the pump 20 feeds the gas while compressing it, thus enabling even a very small amount of gas to be very sensitively detected. Although the sensor 10 is formed in one chip and is thus very small, it can exhibit a more sensitive detecting performance than the conventional sensors.

Since the sensor unit 50 can detect various types of molecules, it is possible to identify a substance comprising various types of molecules and to measure its concentration. Providing various resonators 52 with different sensitivities enables the detection dynamic range of the sensor 10 to be widened.

Thus, the sensor 10, which is very small, can provide functions and performance equivalent to or more excellent than those of the conventional sensors. The sensor 10 also has a high portability and can thus be used in any place or environment. The sensor 10 can make measurement in places, environments, or situations where the conventional sensors cannot make measurement.

The sensor 10 can be manufactured by a micromachining technology such as the MEMS, thus enabling mass production at lower costs.

The pump 20 utilizes the thermal expansion of the gas to enable the volume (pressure) of the gas to be reliably changed. This makes it possible to reliably transfer the gas even at a very low flow rate. Further, to transfer the gas, it is only necessary to provide the flow passage comprising the chamber 22, inlet channel 23, outlet channel 24, inlet diffuser 25, and outlet diffuser 26, as well as the heater 29. Consequently, no mechanical movable part is required, thus improving reliability. It is also possible to avoid a possible operating sound, possible heat generation during operation, or the like, which may disadvantageously occur if a movable part is provided.

The pump 20 may be very small in size owing to its configuration. This also enables a reduction in the size of the detection sensor or the like which is combined with the pump 20.

[Examples]

The operation of the pump 20 configured as described above was verified by simulation. The chamber 22 had an inner diameter of 100 $\mu$m, and the inlet channel 23 had a width of 10 $\mu$m and a height of 20 $\mu$m. The outlet channel 24 had a width of 10 $\mu$m and a height of 20 $\mu$m, and the inlet diffuser 25 had a length of 5 $\mu$m, a width of 1 to 4 $\mu$m, and a height of 2 to 5 $\mu$m. The outlet diffuser 26 had the same shape as that of the inlet diffuser 25.

A cycle was repeated such that a 100-mA current was passed through the heater 29 for 100 ms and the passage of the current was stopped for 100 ms.

The temperature in the chamber 22 varied cyclically between the room temperature and 500 °C. Gas was ejected from the outlet channel 24 so that the amount of gas ejected per temperature cycle accounted for 3% of the volume of the chamber 22.

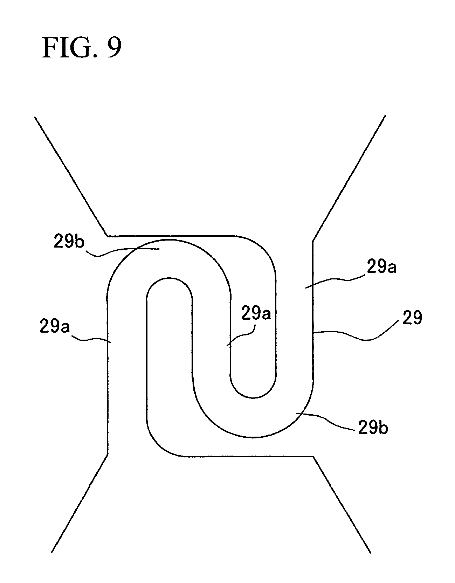

The heater 29 was S-shaped and had two folded portions 29b as shown in FIG. 9. An electrode layer 83 comprising Pt was formed on the binder layer 82 comprising Ti. Each portion of pattern of the heater 29 had a fixed width of 26 $\mu$m. Simulation was executed on the basis of numerical analysis by assuming that a 100-mA current was passed through this heater 29.

The numerical analysis involved two methods, a finite elementmethod (ANSYS) anda finitedifferencemethod (Matlab).

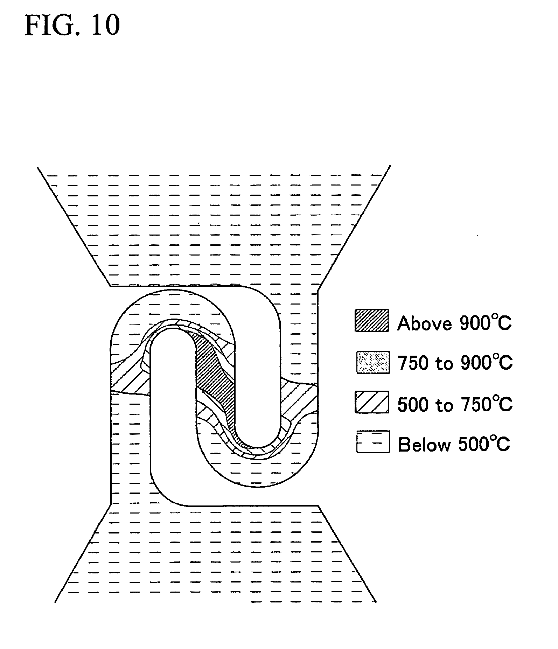

FIG. 10 shows the analysis result based on the finite element method. FIG. 10 indicates that the highest temperatures were observed in the area between the two folded portions 29b. A verification of a current distribution indicated that the largest current flowed in the area between the two folded portions 29b, which corresponded to the hottest area. This indicates that the heater 29 was broken in this area.

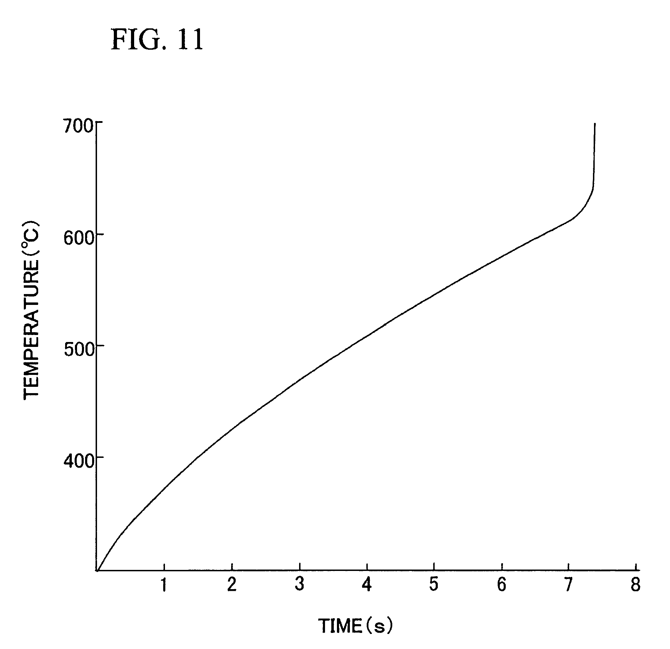

FIG. 11 shows a variation in temperature observed before the heater 29 was broken. As shown in FIG. 10, the temperature in the broken part of the heater 29 was several hundred degrees higher than the other parts. FIG. 11 shows that passage of a current rapidly raised the temperature in this part, which was broken 7.3 $\mu$s later.

FIG. 18B is an actual microscopic photograph of the damaged heater 29. This figure shows that an actual break occurred in the hottest area in FIG. 10. This agrees with the simulation results.

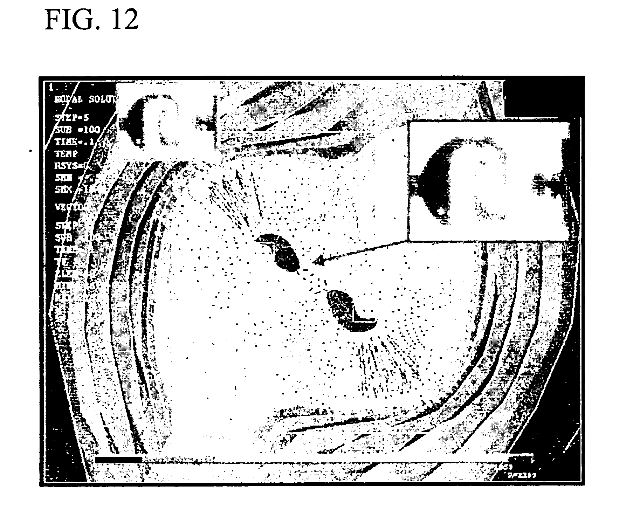

FIG. 12 shows the analysis result based on the finite differential method. The analysis result indicates that the folded portion 29b of the heater 29 had a higher temperature on the inner circumference. Further, the temperature gradient from the inner circumference to outer circumference of the heater 29 was steep in a hot area. This area corresponded to the position where the heater 29 was damaged.

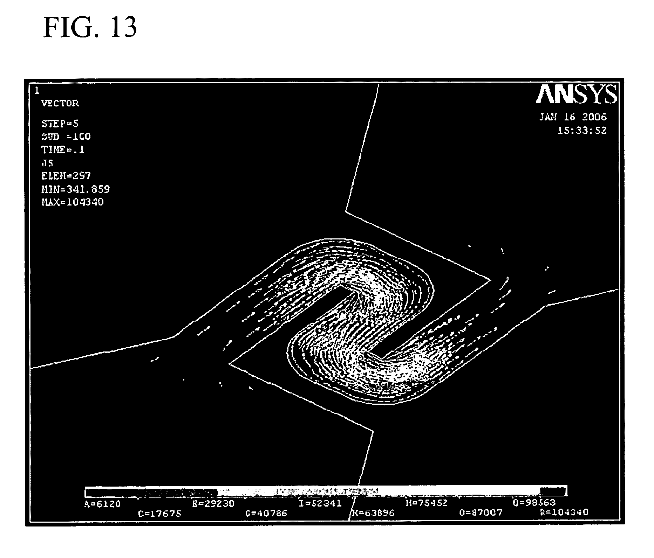

FIG. 13 shows the analysis result of a current density distribution. This figure shows that a current concentrated on the inner circumference of the folded portion 29b of the heater 29. The current had a very high density in a sharply curved inner-circumferential area with a small radius of curvature, which corresponded to the damaged part of the heater 29.

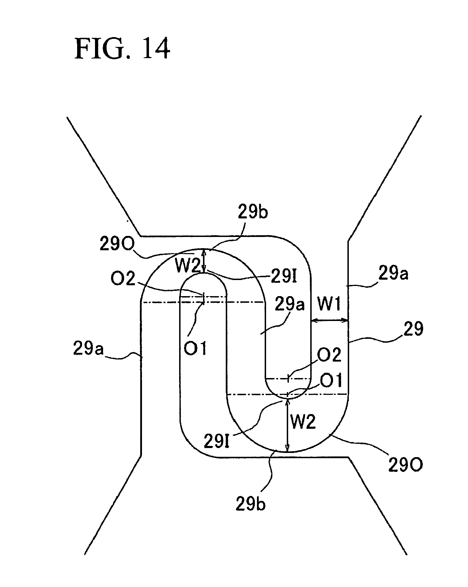

Thus, analysis was executed with the folded portions 29b of the heater 29 configured so that the center of curvature 02 on the inner circumference 29I was offset from the center of curvature O1 of the outer circumference 290 as shown in FIG. 14.

At this time, in one of the two folded portions 29b, the center of curvature 02 of the inner circumference 29I was offset from the center of curvature O1 of the outer circumference 290 so that the width W2 of the folded portion 29b was smaller than that W1 of the linear portion 29a. In the other folded portion 29b, the center of curvature 02 of the inner circumference 29I was offset from the center of curvature 01 of the outer circumference 290 so that the width W2 of the folded portion 29bwas larger than that W1 of the linear portion 29a.

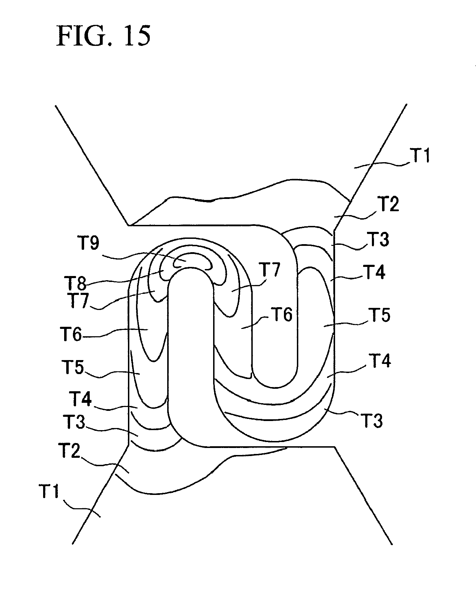

The temperature distribution of the heater 29 was then analyzed based on the finite element method, which was observed when a 100-mA current was applied to the heater 29. FIG. 15 shows the state observed 1 ms after the application of the current. In FIG. 15, the temperature distribution was divided into ten levels starting from 0 °C; the levels each have a range of about 157 degrees and are labeled as T1 to T9 indicating sequentially increasing temperature levels.

FIG. 15 shows that the temperature rose on the inner circumference of the folded portion 29b formed so as to have a width W2 smaller than the width W1 of the linear portion 29a, whereas the temperature was hindered from rising on the inner circumference of the folded portion 29b formed so as to have a width W2 larger than the width W1 of the linear portion 29a.

The latter arrangement makes it possible to prevent the heater 29 from being excessively heated on the inner circumference of the folded part 29b. This in turn makes it possible to prevent the heater 29 from being broken.

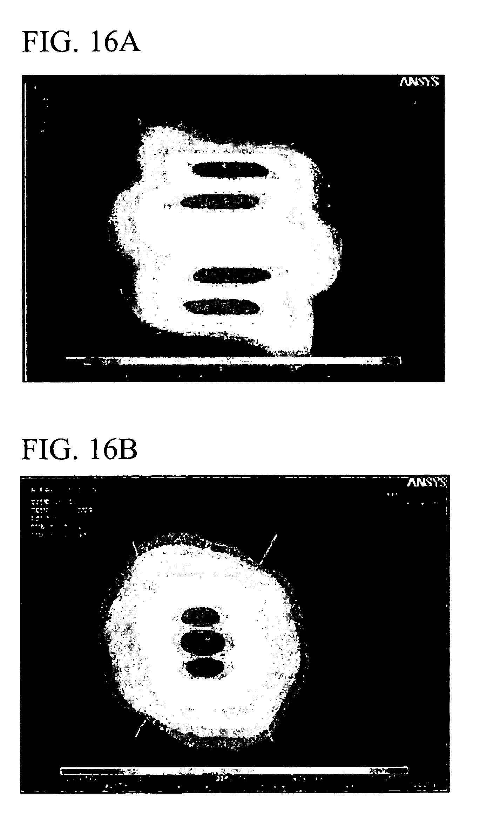

FIG. 16A shows the distribution of temperatures of the heater 29 and its surroundings when the heater 29 was formed to have such a pattern as shown in FIG. 6 on the basis of the above viewpoint; the temperature distribution was observed 100 $\mu$s after a 100-mA current had been applied to the heater 29. FIG. 16B shows the distribution of temperatures of the heater 29 and its surroundings observed 1.5 ms after a 50-mA current had been applied to the heater 29. Both figures show that the temperatures of the heater 29 and its surroundings rose uniformly.

This indicates that the heater 29 of the present invention enables the chamber 22 to be uniformly heated.

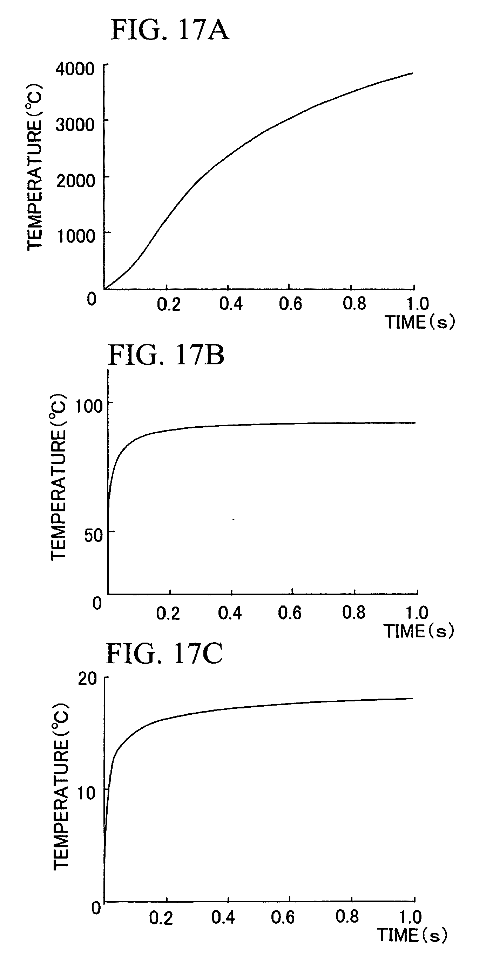

FIG. 17 is a diagram showing how the temperature of the heater 29 changed when a current was applied to the heater 29; FIG. 17A shows the application of a 100-mA current, FIG. 17B shows the application of a 20-mA current, and FIG. 17C shows the application of a 10-mA current. As shown in these figures, the application of a 10-mA current increased the temperature of the heater 29 up to 500 °C in 100 ms. This indicates that the heater 29 could be heated very quickly. Of course, to improve the durability of the heater 29, it is preferable to use a smaller current to provide the heating operation with as long a time as possible providing that no practical problems occur.

Thus, the foldedportion 29b of the heater 29 of the present invention is unlikely to be broken. Thus, the heater 29 can be heated to a higher temperature than the conventional heaters. The heating speed can also be increased. In other words, the difference in the temperature of the heater 29 between the ON state and OFF state can be increased with the switching period reduced. This means that the efficiency of the pump 20 can be increased.

The above embodiment shows the examples of size and material of the pump 20 and a method for manufacturing the pump 20. However, the present invention is not limited to the above scope. Any size, material, and manufacture method may be used provided that similar effects can be exerted. The pump 20 can also be used for other applications.

In the above description, the inlet channel 23 and outlet channel 24 are lined up in the pump 20. However, the present invention is not limited to this configuration. The inlet channel 23 and outlet channel 24 may be arranged in various manners; they may be arranged adj acent to each other or another arrangement is also applicable.

In the above embodiment, silicon is used as a material for the substrate for the pump 20. Silicon offers excellent characteristics such as a high thermal conductivity, high machinability, and low costs. However, the pump 20 may be formed of a glass-, plastic- or ceramic-based material. If a glass- or plastic-based material is used, the pump 20 may be formed using the mold or imprint technology instead of the lithography technology.

In the present embodiment, the substrate 80 is provided with the chamber 22, inlet channel 23, outlet channel 24, inlet diffuser 25, outlet diffuser 26, and the like. The other substrate 81 is provided with the wiring pattern of the heater 29 and flow rate sensor 90. The substrates 80 and 81 are then joined together. However, the present invention is not limited this configuration. For example, the heater 29 and flow rate sensor 90 may be separate entities.

A silicon oxide layer may be provided on the surface of each of the entities such as the chamber 22, inlet channel 23, outlet channel 24, inlet diffuser 25, and outlet diffuser 26, to increase the density of the structure. Alternatively, SiN may be stacked or a nitriding process may be executed to form a coating layer, thus reducing the flow resistance between the surface of each entity and the gas. The material for the surface coating layer may be varied depending on the type of the gas used.

The pump 20 according to the above embodiment uses the fine inlet diffuser 25 and outlet diffuser 26 and thus offers a relatively large flow resistance to the gas. Thus, to increase the flow rate, the following configuration may be used to increase the total flow area: multiple flow passages each consisting of the inlet channel 23 and inlet diffuser 25 are formed at the inlet, while multiple flow passages each consisting of the outlet diffuser 26 and outlet channel 24 are formed at the outlet. In this case, the flow passages may be formed radially from the chamber 22 or in parallel. Alternatively, a number of the pumps 20 may be stacked to increase the total flow area.

The measurement processing unit 60 and controller 70 may be separate from each other rather than being provided on the same substrate 80.

The gas chromatography unit 40 is not an essential arrangement and may be omitted to provide a simpler configuration.

In the above description, the substrates 80 and 81 are made of silicon or silicon oxide, which is highly machinable. However, the substrates 80 and 81 may be formed of glass, ceramics, or any other semiconductor.

Like the heater 29, the heaters 32, 43, and 53 may be formed to have a zigzag folded pattern (shape); the maximum width W2 of the folded portion of each heater is such that $W2 > W1$, more preferably $1 < (W2/W1) < 5$, much more preferably $1.2 < (W2/W1) < 1.5$. This makes it possible to prevent the wiring pattern from being damaged.

The pump 20 alone can be used for various other applications in which it is used to transfer a very small amount of gas. Examples of such applications include the slight adjustment of concentration of gas in a semiconductor process and a gas combusting instrument, and the supply of a coolant for cooling a CPU in a mobile instrument.

Further, any of the configurations described in the above embodiment may be selected for the pump 20, adsorbing unit 30, gas chromatography unit 40, sensor unit 50, measurement processing unit 60, controller 70, and others, or their configuration may be appropriately changed, without departing from the spirit of the present invention.

The molecule detection sensor of the present invention can be formed on one chip and thus has a reduced size, while offering an improved sensitivity. The present invention can reduce the manufacture costs to provide an inexpensive molecule detection sensor.

The gas transferring pump of the present invention can precisely transfer even a very small amount of gas and has a drastically reduced size. The gas transferring pump further has a very simple structure and no movable part and is unlikely to suffer a failure or the like. The gas transferring pump is very durable and reliable.

The present invention can also prevent the folded portion of the heater from being broken, thus improving the durability of the heater.

## Claims

1. A molecule detection sensor comprising:

   a condensation pump that externally sucks a fluid to condense the fluid;
   an adsorbing unit that adsorbs molecules contained in the fluid condensed by the condensation pump;
   a molecule recognizing unit that recognizes a particular type of molecules of those adsorbed by the adsorbing unit when these molecules are attached or adsorbed to the adsorbing unit to change a resonance characteristic of the molecule recognizing unit; and
   a detection unit that detects the change in resonance of the molecule recognizing unit to detect the molecules,
   wherein at least the condensation pump, adsorbing unit, and molecule recognizing unit are integrally formed on a substrate.

2. The molecule detection sensor according to claim 1, wherein the condensation pump comprises:

   a pump main body in which a flow passage is formed to externally pump the fluid into the adsorbing unit;
   a volume change generating unit that changes the volume of the fluid in the flow passage; and
   a counter-flow reducing unit that hinders the fluid from moving away from the detection unit in the flow passage when the volume change generating unit changes the volume of the fluid.

3. The molecule detection sensor according to claim 2, wherein the volume change generating unit comprises a heater and a controller that changes the heating temperature of the heater, and the heater is formed by alternately connecting serially linear portions and folded portions in an area corresponding to the volume change generating portion, and the maximum width W2 of the folded portion being larger than the width W1 of the linear portion.

4. The molecule detection sensor according to claim 1, wherein at least one of the adsorbing units, molecule recognizing unit, and detection unit comprises a desorption heater that desorbs the attached or adsorbed molecules, and the desorption heater is formed by alternately connecting serially linear portions and folded portions, the maximum width W2 of the folded portion being larger than the width W1 of the linear portion.

5. The molecule detection sensor according to claim 1, further comprising a molecular weight analyzing unit that analyzes the molecular weight of the molecules adsorbed by the adsorbing unit, wherein the molecule recognizing unit recognizes the molecules on the basis of a change in resonance characteristic caused by attachment or adsorption of the molecules of which molecular weights have been analyzed by the molecular weight analyzing unit.

6. The molecule detection sensor according to claim 1, wherein a number of the molecule recognizing units with different sensitivities are provided, and the detection unit uses the molecule recognizing unit with a higher sensitivity to recognize the molecules if the molecule recognizing unit with a lower sensitivity cannot recognize the molecules.

7. The molecule detection sensor according to claim 1, wherein several types of the molecule recognizing units are provided which adsorb different types of molecules or allow different types of molecules to attach to the molecule recognizing units, and the detection unit identifies a substance contained in the fluid on the basis of the type of the molecule recognizing unit having recognized the molecules.

8. A detection sensor comprising:

a detection unit that detects a substance having a mass contained in gas; and
a pump that pumps the gas into the detection unit,

wherein the pump comprises:

a pump main body in which a flow passage is formed to externally pump the gas into the detection unit;
a volume change generating unit that changes the volume of the gas in the flow passage; and
a counter-flow reducing unit that hinders the gas from moving away from the detection unit in the flow passage when the volume change generating unit changes the volume of the gas.

9. The detection sensor according to claim 8, wherein the pump main body has a chamber, and the volume change generating unit changes the volume of the gas in the chamber, and
as the counter-flow reducing unit, reduced diameter portions in which the inner diameter of the flow passage gradually decreases in a moving direction of the gas is formed in front of and behind the chamber.

10. The detection sensor according to claim 8, wherein the volume change generating unit comprises a heater and a controller that changes the temperature of the heater, and
the heater is formed by alternately connecting serially linear portions and folded portions in an area corresponding to the volume change generating unit, and the maximum width W2 of the folded portion being larger than the width W1 of the linear portion.

11. A gas transferring pump comprising:

a chamber formed in the pump;
a first channel formed to allow the chamber to communicate with an exterior of the pump;
a second channel formed to allow the chamber to communicate with the exterior of the pump at a position different from that for the first channel;
a first reduced diameter portion formed between the chamber and the first channel and having an inner diameter gradually decreasing from the first channel toward the chamber;
a second reduced diameter portion formed between the chamber and the second channel and having an inner diameter gradually decreasing from the chamber toward the second channel; and
temperature changing means for changing a temperature in the chamber.

12. The gas transferring pump according to claim 11, wherein the temperature changing means repeatedly raises and lowers the temperature in the chamber to change the volume of the gas in the chamber to transfer the gas from the first channel toward the second channel.

13. The gas transferring pump according to claim 11, wherein in the pump, the gas is not subjected to a phase change and is transferred in a gaseous state.

14. The gas transferring pump according to claim 11, wherein the temperature changing means comprises a heater and a controller that changes the temperature of the heater, and
the heater is formed by alternately connecting serially linear portions and folded portions in an area corresponding to the chamber, each of the folded portions being connected to the corresponding linear portion, and the maximum width W2 of the folded portion being larger than the width W1 of the linear portion.

15. The gas transferring pump according to claim 14, wherein the width W1 of the linear portion and the maximum width W2 of the folded portion meets the relation:

$$1 < W2/W1 < 5.$$

16. The gas transferring pump according to claim 15, wherein the width W1 of the linear portion and the maximum width W2 of the folded portion meets the relation:

$$1.2 < W2/W1 < 1.5.$$

17. The gas transferring pump according to claim 14, wherein the length L of the linear portion is equal to or smaller than the inner diameter D of the chamber.

18. The gas transferring pump according to claim 11, further comprising a flow rate sensor that detects the flow rate of the gas flowing through the pump.

19. The gas transferring pump according to claim 18, wherein the flow rate sensor is provided near the flow passage for the gas comprising the first channel, the first reduced diameter portion, the chamber, the second reduced diameter portion, and the second channel, and detects a change in temperature in the flow passage and thus the flow rate of the gas.

## FIG. 1

FIG. 2

FIG. 3

20

80

22

25a

23

26a

24

25

26

29

70

CONTROLLER

FIG. 4

FIG. 5

## FIG. 6

# FIG. 7

FIG. 8

MEASUREMENT PROCESSING UNIT

60

CONTROLLER

70

FIG. 9

# FIG. 10

| | |
|---|---|
| ▨ | Above 900°C |
| ▨ | 750 to 900°C |
| ▨ | 500 to 750°C |
| ▱ | Below 500°C |

FIG. 11

FIG. 12

# FIG. 13

FIG. 14

FIG. 15

## FIG. 16A

## FIG. 16B

## FIG. 17A

## FIG. 17B

## FIG. 17C

## FIG. 18A

101

100

## FIG. 18B

101

100

101

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61059911 A

**Non-patent literature cited in the description**

- **SUMAN CHERIAN ; THOMAS THUNDAT.** Determination of adsorption-induced variation in the spring constant of a microcantilever. *Applied Physics Letter,* 2002, vol. 80 (12), 2219-2221